# EUROPEAN PATENT APPLICATION

(11) **EP 3 101 303 A1**
(43) Date of publication of application: **07.12.2016**
(21) Application number: 15742700.6
(22) Date of filing: 21.01.2015
(51) Int. Cl.: F16D 65/092, F16D 55/24

(54) **BRAKE PAD AND CALIPER DEVICE**

(30) Priority: 29.01.2014 JP 2014014884
(71) Applicant: Sumitomo Bakelite Co.,Ltd., Tokyo 140-0002 (JP)
(72) Inventor: YAMAMOTO, Shinya, Tokyo 140-0002 (JP); INOKUCHI, Hideaki, Tokyo 140-0002 (JP)
(74) Representative: Ter Meer Steinmeister & Partner
(86) International application number: PCT/JP2015/051530
(87) International publication number: WO 2015/115270

(57) **Abstract**

A brake pad 10 can brake a disc 200, and includes a friction material 12 provided on the side of the disc 200 and a back plate 11 bonded on the side of the friction material 12 opposite from the disc 200. The back plate 11 has a contact portion 111 making contact with a piston 30 and an edge portion, and a thickness of the contact portion 111 is substantially constant and larger than a thickness of the edge portion. It is preferred that the back plate 11 has a gradual decrease portion 112 whose thickness gradually decreases from the contact portion 111 toward the edge portion. This makes it possible to provide the brake pad capable of sufficiently and uniformly transmitting a pressing force of the piston to the disc through the whole surface of the friction material, and a caliper device provided with the brake pad.

## Description

### TECHNICAL FIELD

The present invention relates to a brake pad and a caliper device.

### BACKGROUND ART

A brake pad for a disc brake generally includes a lining (a friction material) for braking the disc and a back plate for supporting the lining. In order to support the lining, this back plate has to have heat resistance, brake resistance, and high mechanical strength in a high temperature atmosphere. For this reason, conventionally, ceramic plates or metal plates have been used for the back plate. However, the ceramic plates or the metal plates have problems at the following points. Namely, their weights are heavy, it takes a long time for machining them, and their costs are high, and the like.

Therefore, recently, for the purpose of weight saving and cost reduction, it is proposed that a plate produced by molding a synthetic resin mixed with fibers is used for the back plate as replacements for the ceramic plates or the metal plates.

As technology relating to such a back plate, Patent document 1 discloses a back plate composed of a carbon fiber reinforced plastic plate.

Meanwhile, a rotating disc is braked due to a frictional force generated by pressing the back plate against the disc by a piston.

However, in the case of the conventional brake pad provided with the back plate made of the synthetic resin, since a pressing force of the piston cannot be sufficiently and uniformly transmitted to the disc through the whole surface of the lining, it is difficult to obtain sufficient braking performance.

### PRIOR ART DOCUMENT

### PATENT DOCUMENT

Patent document 1: JP-A 2010-48387

### SUMMARY OF THE INVENTION

### PROBLEM TO BE SOLVED BY THE INVENTION

An object of the present invention is to provide a brake pad capable of sufficiently and uniformly transmitting a pressing force of a piston to a disc through the whole surface of a friction material, and a caliper device provided with the brake pad.

### MEANS OF SOLVING THE PROBLEM

In order to achieve such an object, the present invention includes the following features (1) to (6).
(1) A brake pad for braking a rotating disc by being pressed toward the disc by a piston, the brake pad comprising:
   a friction material provided on the side of the disc; and
   a back plate bonded on the side of the friction material opposite from the disc, the back plate having a contact portion making contact with the piston and an edge portion,
   wherein a thickness of the contact portion of the back plate is substantially constant and larger than a thickness of the edge portion of the back plate.
(2) The brake pad according to the above feature (1), wherein the back plate has a gradual decrease portion whose thickness gradually decreases from the contact portion toward the edge portion.
(3) The brake pad according to the above feature (1) or (2), wherein the back plate has a rib extending from the contact portion toward the edge portion, and a height of the rib gradually decreases from the contact portion toward the edge portion.
(4) The brake pad according to any one of the above features (1) to (3), wherein the contact portion has a ring shape in a planar view thereof, and a through hole is provided on the inside of the contact portion so as to pass through the back plate along a thickness direction thereof.
(5) The brake pad according to any one of the above features (1) to (4), wherein the thickness of the back plate at the contact portion is in the range of 4 to 12 mm.
(6) A caliper device comprising:
   the brake pad defined by any one of the above features (1) to (5);
   the piston that presses the brake pad toward the disc; and
   a caliper in which the piston is put so as to be movable.

### EFFECT OF THE INVENTION

According to the present invention, it is possible to provide the brake pad capable of sufficiently and uniformly transmitting a pressing force of the piston to the disc through the whole surface of the friction material, and the caliper device provided with the brake pad.

### BRIEF DESCRIPTION OF THE DRAWINGS

FIG. 1 is a cross-sectional view showing one example of a caliper device of the present invention.
FIG. 2 is a cross-sectional view showing one example of the caliper device of the present invention.
FIG. 3 is a planar view showing a first embodiment of the brake pad of the present invention.
FIG. 4(a) is an A-B cross-sectional view of the brake pad shown in FIG. 3, and FIG. 4(b) is a C-D cross-sectional view thereof.
FIG. 5 is a view showing a state of the brake pad of the present invention being arranged so as to correspond to a disc.
FIG. 6 is a planar view showing a second embodiment of the brake pad of the present invention.
FIG. 7(a) is an A-B cross-sectional view of the brake pad shown in FIG. 6, and FIG. 7(b) is a C-D cross-sectional view thereof.
FIG. 8 is a planar view showing a third embodiment of the brake pad of the present invention.
FIG. 9(a) is an A-B cross-sectional view of the brake pad shown in FIG. 8, and FIG. 9(b) is a C-D cross-sectional view thereof.

### MODE FOR CARRYING OUT THE INVENTION

Description will be made on a brake pad and a caliper device of the present invention in detail based on preferred embodiments shown in the attached drawings.

First, the caliper device of the present invention will be described in detail.

### [Caliper device]

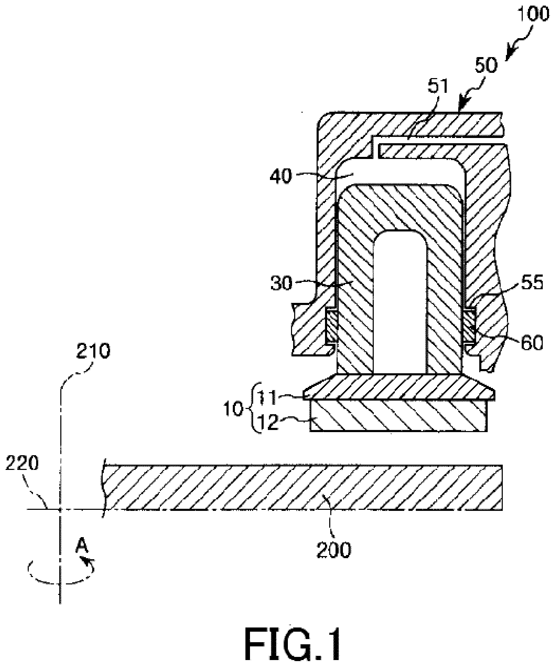

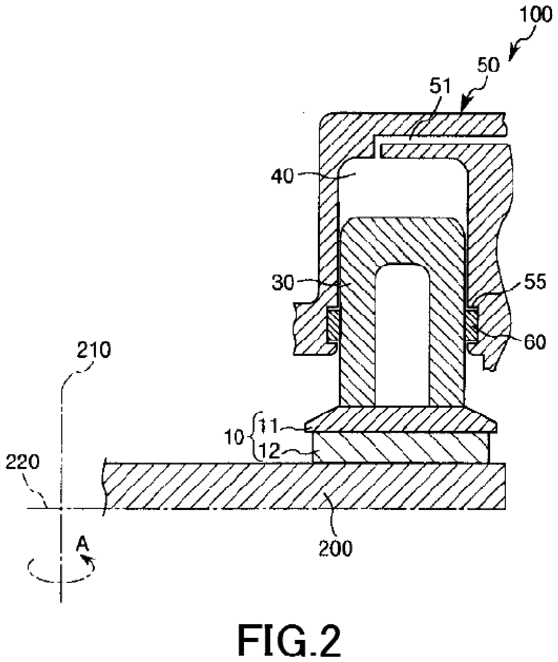

Each of FIG. 1 and FIG. 2 is a cross-sectional view showing one example of the caliper device of the present invention. Each of FIG. 1 and FIG. 2 is a view showing a state of the caliper device being arranged so as to correspond to a disc. FIG. 1 is the view showing a state of the disc being not braked (being released), and FIG. 2 is the view showing a state of the disc being braked by the caliper device.

In this regard, in the following description, the upper side of FIG. 1 is referred to as the "top", and the lower side thereof is referred to as the "bottom".

A caliper device 100 shown in FIGs. 1 and 2 is used for braking a rotating (revolving) disc 200. As shown in FIGs. 1 and 2, the disc 200 rotates about a rotation axis 210 along a direction indicated by an arrow A.

The caliper device 100 is provided adjacent to the disc 200. This caliper device 100 includes a caliper 50, a piston 30, and a brake pad 10.

The caliper 50 serves as a casing in which the piston 30 is put (held). As shown in FIGs. 1 and 2, the caliper 50 has a space 40 opening on the bottom side, and a flow channel 51 communicating with the space 40. The space 40 is of a cylindrical shape, and the piston 30 is put in the space 40.

A ring-shaped groove 55 is formed on an inner circumferential surface of the caliper 50 defining the space 40. Inside the groove 55, provided (inserted) is a ring-shaped seal member 60 formed of an elastic material. Further, the seal member 60 makes pressure contact with an outer circumferential surface of the piston 30 such that the piston 30 is slidable.

In this regard, the single seal member 60 is provided in the space 40 in this embodiment, but the number of the seal member is not limited thereto. In the space 40, for example, two or more seal members may be provided side by side along the vertical direction of FIG. 1. Further, the number of the seal members may be appropriately set depending on the intended purpose of the caliper device 100, required performance thereof, and the like.

Furthermore, it is also indisputable that a seal structure formed by such a seal member 60 is not limited to the illustrated structure.

The piston 30 has a function of pressing the brake pad 10 against the disc 200.

As described above, the piston 30 is put in the space 40, and the seal member 60 makes pressure contact with the outer circumferential surface of the piston 30. Therefore, the space 40 is liquid-tightly sealed by the seal member 60.

The space 40 is filled with a brake fluid. In the caliper device 100, the brake fluid can be supplied into the space 40 and discharged out of the space 40 via the flow channel 51 by using a hydraulic device not illustrated. By providing the seal member 60, it is possible to prevent leakage of the brake fluid out of the space 40 and penetration of foreign substances into the space 40.

The brake pad 10 has a function of controlling the rotation of the disc 200 (reducing a rotational speed thereof) due to a frictional force generated between the brake pad 10 and the disc 200 by making pressure contact with the disc 200 during braking.

The brake pad 10 is provided between the piston 30 and the disc 200. The brake pad 10 is composed of a bonded body in which a back plate 11 and a friction material 12 are bonded together. The back plate 11 is positioned on the side of the piston 30, and the friction material 12 is positioned on the side of the disc 200. A top surface of the back plate 11 makes contact with a bottom surface of the piston 30. In this regard, both members may be bonded or not bonded together. Further, a bottom surface of the friction material 12 faces a top surface of the disc 200.

The caliper device of the present invention can be used for either an opposing type caliper device or a floating type caliper device.

In the case of the opposing type caliper device, while not illustrated, a control mechanism having the same configuration as a control mechanism including the above mentioned space 40, piston 30 and brake pad 10 is provided on the bottom side of the disc via a center line 220 of the disc 200 (with a mirror image arrangement). In other words, in the case of the opposing type caliper device, a pair of control mechanisms each including the space, the piston and the brake pad is provided via the disc 200. According to the opposing type caliper device having such a configuration, both the brake pads provided in a pair move with respect to the caliper 50 and sandwich the disc 200 to thereby brake the rotation of the disc 200. Further, the number of sets (the number of pairs) of such control mechanisms is not limited to one set, and may be, for example, a plurality of sets such as two sets or three sets.

On the other hand, in the case of the floating type caliper device, while not illustrated, a brake pad having the same configuration as the above mentioned brake pad 10 is provided on the bottom side of the disc 200 via the center line 220 of the disc 200, and fixed to the caliper 50 at this position. In other words, a pair of brake pads including the brake pad 10 movable with respect to the caliper 50 and the brake pad fixed to the caliper 50 is provided via the disc. Further, the number of sets (the number of pairs) of the brake pads is not limited to one set, and may be, for example, a plurality of sets such as two sets or three sets.

Next, operation of the caliper device 100 will be described.

In the caliper device 100, during non-braking (in an initial state), the bottom surface of the friction material 12 is separated from the top surface of the disc 200 at a slight distance.

From this state, when braking the rotating disc 200, the brake fluid is supplied into the space 40 via the flow channel 51 by using the above mentioned hydraulic device. At this time, a pressure (a fluid pressure) of the brake fluid with respect to the piston 30 in the space 40 increases so that the piston 30 moves toward the disc 200. At the same time, the brake pad 10 also moves downward in FIG. 1 along with the moving piston 30, and as shown in FIG. 2, the friction material 12 thereof makes pressure contact with the disc 200. As a result, the frictional force is generated between the friction material 12 of the brake pad 10 and the disc 200, and thus the rotation of the disc 200 is suppressed due to it.

In this regard, when the piston 30 has moved to the side of the disc due to the increase of the fluid pressure of the brake fluid in the space 40, a portion of the seal member 60 that makes pressure contact with the piston 30 is pulled to the side of the disc 200 so that the seal member 60 undergoes elastic deformation.

On the other hand, when releasing the braking of the disc 200, the supply of the brake fluid into the space 40 by using the hydraulic device is stopped, or the brake fluid is withdrawn from the space 40 to the hydraulic device via the flow channel 51. By doing so, a part of the brake fluid in the space 40 is discharged out of the space 40 via the flow channel 51 so that the pressure (the fluid pressure) of the brake fluid with respect to the piston 30 decreases. For this reason, a force pressing the piston 30 toward the disc 200 decreases so that the seal member 60 becomes deformed to the non-braking state due to a restoring force thereof. This allows the piston 30 to move in a direction of separating from the disc 200 (upward). At this time, the bottom surface of the friction material 12 separates from the top surface of the disc 200, or a pressure contact force of the bottom surface of the friction material 12 to the top surface of the disc 200 decreases. As a result, the braking of the disc 200 is released.

In the case where the caliper device of the present invention is the opposing type, the respective pistons and brake pads, which are provided opposite to each other via the center line 220 of the disc 200, operate in the same manner as described above both during braking and during releasing of the braking. In the case of the opposing type caliper device, it is possible to obtain a larger braking force by sandwiching the disc 200 from both sides thereof by at least one pair of the brake pads during braking.

Further, in the case of the floating type, the disc 200 is braked by being sandwiched by the brake pad 10 movable with respect to the caliper 50 and the brake pad fixed to the caliper 50. In other words, when the movable brake pad 10 is pressed against the disc 200, the caliper 50 moves in a direction separating from the disc 200 (upward) due to a reaction force thereof. By the upward moving of the caliper 50, the brake pad (not illustrated) provided opposite to the brake pad 10 and fixed to the caliper 50 also moves upward, that is, in a direction approaching the disc 200, and is pressed against the disc 200. As a result, the disc 200 is braked by being sandwiched between the movable brake pad 10 and the fixed brake pad.

The intended purpose of the caliper device of the present invention is not particularly limited, and the device can be used in, for example, airplanes, vehicles (automobiles), motorcycles, bicycles, rail cars, elevators, robots, construction machineries, agricultural machineries, other industrial machineries, and the like.

### [First embodiment of brake pad]

Next, a first embodiment of the brake pad provided in the caliper device of the present invention will be described.

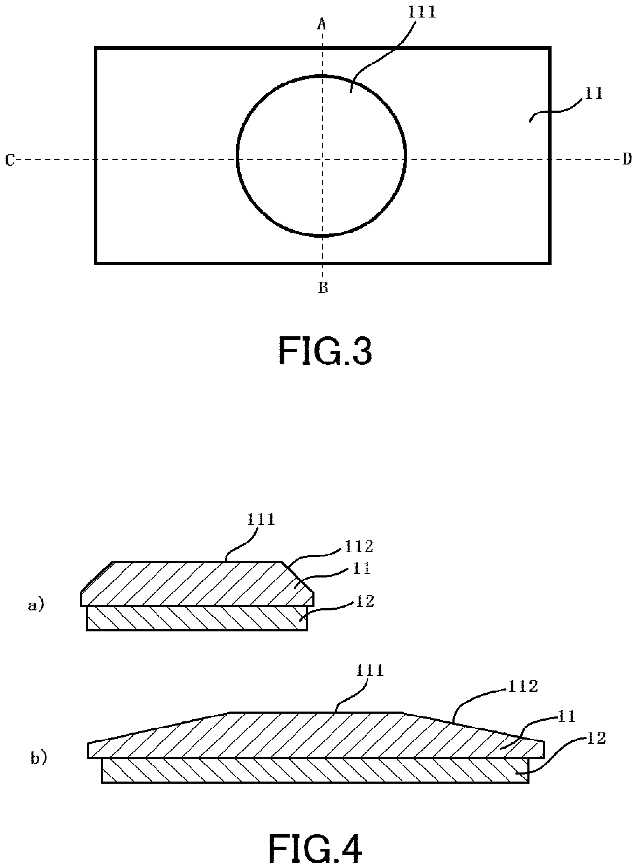

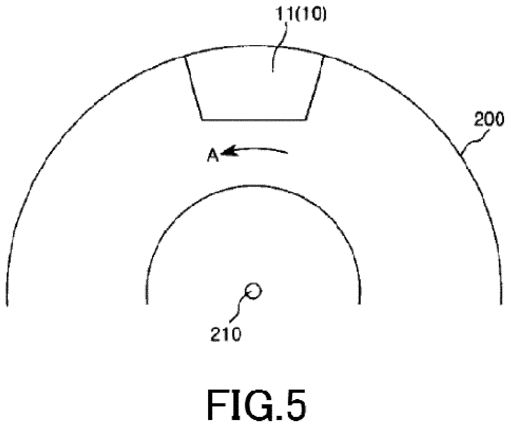

FIG. 3 is a planar view showing the first embodiment of the brake pad of the present invention. FIG. 4(a) is an A-B cross-sectional view of the brake pad shown in FIG. 3, and FIG. 4(b) is a C-D cross-sectional view thereof. FIG. 5 is a view showing a state of the brake pad of the present invention being arranged so as to correspond to the disc. In this regard, the direction along the arrow A in FIG. 5 is referred to as a rotational direction of the disc 200. Namely, the "rotational direction of the disc 200" means a rotational direction of the disc 200 at a position where the brake pad 10 is attached to the piston 30 of the caliper device 100. Further, a "radial direction of the disc 200" means a direction perpendicular to the direction along the arrow A in FIG. 5.

The brake pad of the present invention can control the rotation of the disc due to the frictional force generated between the brake pad and the disc by making pressure contact with the disc during braking.

As described above, the brake pad 10 is composed of the bonded body in which the back plate 11 and the friction material 12 are bonded together.

In this embodiment, as shown in FIGs. 1 to 4, the back plate 11 is formed so that a thickness of a contact portion making contact with the piston (a central portion) becomes substantially constant and larger than a thickness of an edge portion. In other words, the back plate 11 is of a convex shape when being viewed from any angles of a circumferential direction thereof. In this regard, the edge portion means an outer edge defining the back plate 11.

In the back plate 11 having such a configuration, since the contact portion 111 making contact with the piston 30 has a sufficient large thickness, it is possible to prevent the back plate 11 from being bent due to a pressing force of the piston 30. Further, since the contact portion 111 has the substantial constant thickness, the pressing force of the piston 30 is transmitted to the disc 200 through the whole surface of the friction material 12 in an unbiased way. As a result, it is possible to sufficiently and uniformly supply the pressing force of the piston 30 to the disc 200 through the whole surface of the friction material 12.

Furthermore, since the back plate 11 having such a configuration is prevented from being bent due to the pressing force of the piston 30, it can reliably support the friction material 12 at a high degree of adhesion. Therefore, rattle of the friction material 12 with respect to the back plate 11 hardly occurs during braking of the disc 200. This makes it possible to prevent vibration which would be generated by sliding contact of the friction material 12 with the disc 200 from being amplified. For this reason, the brake pad 10 (the caliper device 100) provided with such a back plate 11 can continually exhibit excellent braking performance.

Further, in this embodiment, as shown in FIG. 4, the back plate 11 has a gradual decrease portion 112 in which the thickness of the back plate 11 gradually decreases from the contact portion 111 toward the edge portion of the back plate 11. By configuring the back plate 11 in this way, the pressing force of the piston 30 supplied to the contact portion 111 is more uniformly transmitted up as far as the edge portion. Therefore, it is possible to more uniformly transmit the pressing force of the piston 30 to the disc 200 through the whole surface of the friction material 12. As a result, the brake pad 10 (the caliper device 100) provided with such a back plate 11 can exhibit further excellent braking performance.

The thickness of the back plate 11 at the contact portion 111 is preferably in the range of 4 to 12 mm, and more preferably in the range of 5 to 9 mm. This makes it possible to save a weight of the back plate 11, and to maintain bending stiffness of the back plate 11 at high level. On the other hand, if the thickness of the back plate 11 at the contact portion 111 is less than the above lower limit value, there is a case that heat stiffness of the back plate 11 against frictional heat generated during braking becomes relatively low depending on a constituent material (e.g., the type of a resin) thereof. In this case, the back plate 11 cannot sufficiently support the friction material, a braking force of the brake pad may decrease. On the other hand, if the thickness of the back plate 11 at the contact portion 111 exceeds the above upper limit value, a size of the caliper device 100 provided with the brake pad 10 becomes relatively large, and thus it becomes difficult to save a weight thereof.

Further, the thickness of the back plate 11 at the edge portion is smaller than the thickness of the back plate 11 at the contact portion 111, and is preferably in the range of 2 to 11 mm, and more preferably in the range of 2 to 8 mm. This makes it possible to maintain (balance) the weight saving of the brake pad 10 and the heat stiffness of the back plate 11 at a high level.

Furthermore, in this embodiment, as shown in FIG. 3, a planar shape of the brake pad 10 (the friction material 12 and the back plate 11) is a substantially quadrilateral shape. Then, the friction material 12 has a planar size smaller than a planar size of the back plate 11, and is positioned so as to be included within the back plate 11 in the planar view thereof.

In this regard, each of the planar shapes of the friction material 12 and the back plate 11 is the substantially quadrilateral shape in this embodiment, but is not limited thereto. Each of the planar shapes of the friction material 12 and the back plate 11 may be, for example, a substantially circular shape, a polygonal shape, or the like. Further, these planar shapes may also be, respectively, different shapes. In this regard, these planar shapes may be appropriately set depending on the intended purpose of the brake pad 10.

Further, the thickness of the back plate 11 (the gradual decrease portion 112) gradually decreases from the contact portion 111 toward the edge portion in the whole circumferential direction thereof in the above embodiment, but may intermittently decrease from the contact portion 111 toward the edge portion.

Hereinafter, constituent materials of the friction material 12 and the back plate 11 included in the brake pad 10 will be described in detail.

### <Friction material 12>

The friction material 12 has a function of suppressing the rotation of the disc 200 due to friction generated by making contact with the disc 200 during braking.

When the friction material 12 makes contact with the disc 200 during braking, it generates frictional heat due to the friction between the friction material 12 and the disc 200. Therefore, it is preferred that the constituent material of the friction material 12 has excellent heat resistance in order to resist the frictional heat during braking. Concrete examples of the constituent material thereof include, but are not particularly limited to, mixtures containing fiber materials such as rock wool, Kevlar fiber and copper fiber; bonding materials such as a resin; and fillers such as barium sulfate, zirconium silicate, cashew dust and graphite.

Further, an average thickness of the friction material 12 is not particularly limited, but is preferably in the range of 3 to 15 mm, and more preferably in the range of 5 to 12 mm. If the average thickness of the friction material 12 is less than the above lower limit value, there is a case that mechanical strength of the friction material 12 is reduced depending on the constituent material thereof and the like so that it easily breaks and thus becomes a short life-span. On the other hand, if the average thickness of the friction material 12 exceeds the above upper limit value, there is a case that the whole size of the caliper device 100 provided with the friction material 12 becomes slightly large.

### <Back plate 11>

The back plate 11 is hard and has high mechanical strength. For this reason, the back plate 11 is difficult to be deformed, and thus can reliably support the friction material 12 and uniformly transmit the pressing force of the piston to the friction material 12 during braking. Further, the back plate 11 can also make it difficult to transmit the frictional heat and the vibration, which are generated by sliding contact of the friction material 12 to the disc 200, to the piston during braking.

The back plate 11 is preferably formed of a back-plate composition including a resin and a plurality of fibers. Especially, the back plate 11 is more preferably formed of a back-plate composition including a resin, a plurality of first fibers and a plurality of second fibers.

Hereinafter, the back-plate composition constituting the back plate 11 will be described in detail. <<Back-plate composition>>

Hereinafter, each material constituting the back-plate composition will be described in detail.

### (i) Resin

In this embodiment, the back-plate composition contains the resin.

In this regard, in this embodiment, the resin may be in any state such as a solid state, a liquid state, or a semisolid state at room temperature.

Examples of the resin include curable resins such as a thermosetting resin, a photo curable resin, a reactive curable resin and an anaerobically curable resin. Among them, particularly, the thermosetting resin is preferable because it has excellent mechanical properties such as linear expansion coefficient and elastic modulus after curing.

Examples of the thermosetting resin include a phenol resin, an epoxy resin, a bismaleimide resin, a urea resin, a melamine resin, a polyurethane resin, a cyanate ester resin, a silicone resin, an oxetane resin, a (meth)acrylate resin, a unsaturated polyester resin, a diallyl phthalate resin, a polyimide resin, a benzoxazine resin, and the like. One type of them can be used alone or two or more types of them can be used in combination. Among them, particularly, the phenol resin, the epoxy resin, the bismaleimide resin, the benzoxazine resin or the unsaturated polyester resin is preferable, and the phenol resin is more preferable as the thermosetting resin. This makes it possible for the back plate 11 to exhibit particularly excellent heat resistance to the frictional heat generated when the friction material 12 makes contact with the disc 200 during braking.

Examples of the phenol resin include: novolac type phenol resins such as a phenol novolac resin, a cresol novolac resin, a bisphenol A novolac resin and an aryl alkylene type novolac resin; resol type phenol reins such as a unmodified resol phenol resin and an oil-modified resol phenol resin modified with oil (e.g., tung oil, linseed oil or walnut oil), and the like. One type of them can be used alone or two or more types of them can be used in combination. Among them, particularly, the phenol novolac resin is preferable as the phenol resin. This makes it possible to manufacture the back plate 11 at a low cost and with high dimensional accuracy. Further, the obtained back plate 11 can exhibit particularly superior heat resistance.

A weight average molecular weight of the phenol resin is not particularly limited, but is preferably in the range of about 1,000 to 15,000. If the weight average molecular weight is less than the above lower limit value, there is a case that the back-plate composition becomes difficult to be prepared due to too low viscosity of the resin. On the other hand, if the weight average molecular weight exceeds the above upper limit value, there is a case that moldability of the back-plate composition decreases because a melt viscosity of the resin becomes high. For example, the weight average molecular weight of the phenol resin can be measured by gel permeation chromatography (GPC), and then defined as a weight molecular weight in terms of polystyrene.

Examples of the epoxy resin include: bisphenol type epoxy resins such as a bisphenol A type epoxy resin, a bisphenol F type epoxy resin and a bisphenol AD type epoxy resin; novolac type epoxy resins such as a phenol novolac type epoxy resin and a cresol novolac type epoxy resin; brominated type epoxy resins such as a brominated bisphenol A type epoxy resin and a brominated phenol novolac type epoxy resin; a biphenyl type epoxy resin; a naphthalene type epoxy resin; a tris(hydroxyphenyl) methane type epoxy resin; and the like. One type of them can be used alone or two or more types of them can be used in combination. Among them, particularly, a bisphenol A type epoxy resin, a phenol novolac type epoxy resin or a cresol novolac type epoxy resin, which has a relatively low molecular weight, is preferable as the epoxy resin. This makes it possible to enhance flowability of the back-plate composition. As a result, it is possible to further improve handling property and the moldability of the back-plate composition when manufacturing the back plate 11. Further, from the viewpoints of further improving the heat resistance of the back plate 11, the phenol novolac type epoxy resin or the cresol novolac type epoxy resin is preferable, and the tris(hydroxyphenyl) methane type epoxy resin is particularly preferable as the epoxy resin.

The bismaleimide resin is not particularly limited as long as it is a resin having maleimide groups at both ends of a molecular chain thereof, but is preferably a resin having a phenyl group in addition to the maleimide groups. Specifically, as the bismaleimide resin, for example, a resin represented by the following chemical formula (1) can be used. In this regard, the bismaleimide resin may also have a maleimide group bonded to the molecular chain at a position other than both ends thereof.

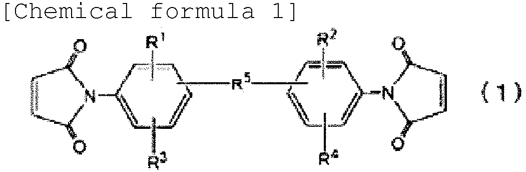

In the chemical formula (1), each of R¹ to R⁴ is a hydrogen atom or a substituted or unsubstituted hydrocarbon group having a carbon number of 1 to 4, and R⁵ is a substituted or unsubstituted organic group. Here, the organic group is a hydrocarbon group that may contain a heteroatom such as O, S or N. R⁵ is preferably a hydrocarbon group having a main chain in which a methylene group, an aromatic ring and an ether bond (-O-) are bonded together in any order, and is more preferably a hydrocarbon group having a main chain in which the number of the methylene group, the aromatic ring and the ether bond, which are bonded together in any order, is 15 or less in total. In this regard, a substituent group and/or a side chain may be bonded to the main chain in the middle thereof. Concrete examples thereof include a hydrocarbon group having a carbon number of 3 or less, a maleimide group, a phenyl group, and the like.

Specifically, examples of the bismaleimide resin include N,N'-(4,4'-diphenyl methane) bismaleimide, bis(3-ethyl-5-methyl-4-maleimidephenyl) methane, 2,2-bis[4-(4-maleimidephenoxy)phenyl] propane, m-phenylene bismaleimide, p-phenylene bismaleimide, 4-methyl-1,3-phenylene bismaleimide, N,N'-ethylene dimaleimide, N,N'-hexamethylene dimaleimide, and the like. One type of them can be used alone or two or more types of them can be used in combination.

An amount of the resin contained in the back-plate composition is not particularly limited, but is preferably in the range of 20 to 80 mass%, and more preferably in the range of 30 to 50 mass%.

If the amount of the resin is less than the above lower limit value, there is a case that the resin cannot have sufficient binding strength with the other materials constituting the back-plate composition (particularly, the first fibers and the second fibers) depending on the types thereof. On the other hand, if the amount of the resin exceeds the above upper limit value, there is a case that amounts of the first fibers and the second fibers described below relatively decrease, and thus effects to be obtained by including the first fibers and the second fibers are not adequately exhibited.

### (ii) Fibers

In this embodiment, the back-plate composition contains a plurality of fibers. The plurality of fibers preferably includes a plurality of first fibers, and more preferably includes the plurality of first fibers and a plurality of second fibers.

Namely, the back-plate composition preferably contains a fiber group that is a mass of the plurality of fibers, more preferably contains at least a first fiber group that is a mass of the plurality of first fibers, and even more preferably contains the first fiber group and a second fiber group that is a mass of the plurality of second fibers.

An average length of the first fibers belonging to the first fiber group is longer than an average length of the second fibers belonging to the second fiber group (in other words, the average length of the second fibers belonging to the second fiber group is shorter than the average length of the first fibers belonging to the first fiber group). In this way, since the back-plate composition contains two types of fibers having different average lengths, the moldability (ease of molding) thereof is improved, and thus the mechanical strength of the molded back plate 11 becomes high.

Hereinafter, such first fibers and second fibers will be described in detail.

In the case where the average length of the first fibers is defined as "L1" [µm], and the average length of the second fibers is defined as "L2" [µm], "L2"/"L1" preferably satisfies a relationship of 0.001 to 0.5, more preferably satisfies a relationship of 0.01 to 0.4, and even more preferably satisfies a relationship of 0.015 to 0.3. If the ratio "L2"/"L1" of the average length "L2" of the second fibers to the average length "L1" of the first fibers is within the above range, the moldability of the back-plate composition is further improved, and the dimensional accuracy and the mechanical strength of the back plate 11 become particularly high.

When the two types of fibers having different average lengths are compared, the first fibers having lengths longer than lengths of the second fibers contribute primarily to securing the mechanical strength of the back plate 11 and to stabilizing the shape of the back plate 11.

On the other hand, the second fibers having shorter lengths also contribute to stabilizing the shape of the back plate 11, but mainly have a role of filling (interpolating) gaps among the first fibers having relatively long lengths. In other words, the second fibers enter the gaps among the first fibers to thereby exhibit a function of enhancing the mechanical strength of the back plate 11 at portions where the first fibers are not present, that is, a function of reinforcing the effect of the first fibers (a reinforcing function). More specifically, the first fibers tend to be highly oriented along a surface direction of the back plate 11 because of the lengths thereof. In contrast, the second fibers enter the gaps among the first fibers, but tend to be oriented not only along the surface direction of the back plate 11 but also along a direction that differs from the surface direction of the back plate 11. In this way, the different orientation state of the first fibers and the second fibers makes it possible to sufficiently impart the mechanical strength and the shape stability to the back plate 11 even if both the first fibers and the second fibers are used in small amounts.

The above function is remarkably exhibited particularly by setting the "L2"/"L1" within the above range. Furthe, in the case where the first fibers and the second fibers are formed of the same material or the same type of material, this tendency is remarkably obtained.

The average length "L1" of the first fibers is preferably in the range of 5 to 50 mm, and more preferably in the range of 8 to 12 mm. If the average length "L1" of the first fibers is less than the above lower limit value, there is a case that the shape stability of the back plate 11 is not sufficiently obtained depending on the constituent material of the first fibers and an amount thereof. On the other hand, if the average length "L1" of the first fibers exceeds the above upper limit value, there is a case that the flowability of the back-plate composition is not sufficiently obtained when molding the back plate 11.

Further, the average length "L2" of the second fibers is preferably in the range of 50 µm to 10 mm, more preferably in the range of 150 µm to 5 mm, and even more preferably in the range of 200 µm to 3 mm. If the average length "L2" of the second fibers is less than the above lower limit value, for example, when the amount of the first fibers is small, there is a case that the amount of the second fibers contained in the back-plate composition has to be relatively large in order to improve the reinforcing function by the effect of the first fibers. On the other hand, if the average length "L2" of the second fibers exceeds the above upper limit value, when the amount of the first fibers is large, there is a case that the ratio of the second fibers entering the gaps among the first fibers decreases.

An average diameter "D1" of the first fibers is preferably in the range of 5 to 20 µm, more preferably in the range of 6 to 18 µm, and even more preferably in the range of 7 to 16 µm. If the average diameter "D1" of the first fibers is less than the above lower limit value, there is a case that the first fibers easily break when molding the back plate 11 depending on the constituent material of the first fibers and the amount thereof. On the other hand, if the average diameter "D1" of the first fibers exceeds the above upper limit value, there is a case that the back plate 11 has variation in strength between portions where the first fibers are present in a relatively large amount and portions where they are present in a relatively small amount.

Further, an average diameter "D2" of the second fibers is preferably in the range of 5 to 20 µm, more preferably in the range of 6 to 18 µm, and even more preferably in the range of 7 to 16 µm. If the average diameter "D2" of the second fibers is less than the above lower limit value, there is a case that the second fibers easily break when molding the back plate 11 depending on the constituent materials of the first fibers and the second fibers and the amounts thereof. On the other hand, if the average diameter "D2" of the second fibers exceeds the above upper limit value, there is a case that the second fibers become difficult to enter the gaps among the first fibers depending on the amount of the first fibers.

A cross-sectional shape of each first fiber is not particularly limited, and may be any shape including: a substantially circular shape such as a circular shape or an elliptical shape; a polygonal shape such as a triangular shape, a quadrilateral shape or a hexagonal shape; an irregular shape such as a flat shape or a star shape; and the like. Among them, particularly, the cross-sectional shape of each first fiber is preferably the substantially circular shape or the flat shape. This makes it possible to improve smoothness of the surface of the back plate 11.

A cross-sectional shape of each second fiber is not particularly limited, and may be any shape including: a substantially circular shape such as a circular shape or an elliptical shape; a polygonal shape such as a triangular shape or a quadrilateral shape; an irregular shape such as a flat shape or a star shape; and the like. Among them, particularly, the cross-sectional shape of each second fiber is preferably the substantially circular shape or the flat shape. This makes it possible to further improve the handling property of the back-plate composition when molding it to thereby make the moldability thereof better.

In the back-plate composition, the first fibers may be present as single bodies, or may be present as fiber bundles in which several first fibers are compactly integrated together. If the first fibers form the fiber bundles, each fiber bundle may be of any shape such as a twisted fiber shape, a linear shape, a netlike shape or the like. The same also applies to the second fibers.

Examples of the first fibers and the second fibers, respectively, include: organic fibers such as aramid fibers, acrylic fibers, nylon fibers (aliphatic polyamide fibers) and phenol fibers; inorganic fibers such as glass fibers, carbon fibers, ceramic fibers, rock wool, potassium titanate fibers and basalt fibers; metal fibers such as stainless steel fibers, steel fibers, aluminum fibers, copper fibers, brass fibers and bronze fibers; and the like. One type of them can be used alone or two or more types of them can be used in combination. Among them, particularly, the first fibers and the second fibers are, respectively, more preferably the aramid fibers, the carbon fibers or the glass fibers, and at least one type of the first fibers and the second fibers are even more preferably the glass fibers.

In the case where the glass fibers are used, it is possible to improve homogeneity of the back-plate composition per unit volume to thereby make the moldability of the back-plate composition particularly good. Furthermore, by improving the homogeneity of the back-plate composition, it is possible to improve uniformity of internal stress in the formed back plate 11 to thereby reduce waviness of the back plate 11. Further, it is also possible to further improve wear resistance of the back plate 11 under high load. Furthermore, in the case where the carbon fibers or the aramid fibers are used, it is possible to further improve the mechanical strength of the back plate 11, and to more save the weight of the back plate 11.

Concrete examples of glass constituting the glass fibers include E-glass, C-glass, A-glass, S-glass, D-glass, NE-glass, T-glass, and H-glass. Among them, particularly, the E-glass, the T-glass, or the S-glass is preferable as the glass constituting the glass fibers. By using such glass fibers, it is possible to impart higher elasticity to the first fibers and/or the second fibers, and to reduce thermal expansion coefficient thereof.

Further, concrete examples of the carbon fibers include high-strength carbon fibers each having a tensile strength of 3,500 MPa or more, and high-elastic modulus carbon fibers each having an elastic modulus of 230 GPa or more. The carbon fibers may be either polyacrylonitrile (PAN) based carbon fibers or pitch-based carbon fibers, but are preferably the polyacrylonitrile based carbon fibers because of their high tensile strength.

Furthermore, an aramid resin constituting the aramid fibers may have either a meta type chemical structure or a para type chemical structure.

The first fibers and the second fibers may be, respectively, formed of different materials, but are preferably formed of the same material or the same type of material. By using the same material or the same type of material as the constituent materials of the first fibers and the second fibers, mechanical strengths of the first fibers and the second fibers become close to each other, and thus the handling property thereof when preparing the back-plate composition is further improved.

Here, the phrase "the same type" used in this specification means that in the case where the first fibers are the glass fibers, the second fibers are also the glass fibers. In this regard, differences of glass varieties such as the E-glass and the C-glass are included in the range of "the same type".

Further, in this specification, the phrase "the same" means that in the case where both the first fibers and the second fibers are the glass fibers and the first fibers are fibers formed of the E-glass, the second fibers are also fibers formed of the E-glass.

In the case where the first fibers and the second fibers are formed of the same type of material, particularly, the first fibers and the second fibers are preferably the aramid fibers, the carbon fibers or the glass fibers, and more preferably the glass fibers. If both the first fibers and the second fibers are the glass fibers, the mechanical strengths thereof become close to each other, and the handling property thereof when preparing the back-plate composition becomes better. Further, since both the first fibers and the second fibers can have the above mentioned merits of the glass fibers, the flowability of the back-plate composition is further improved, and the moldability of the back-plate composition becomes particularly good.

In the case where both the first fibers and the second fibers are the glass fibers and formed of the same glass, particularly, the type of glass is preferably the E-glass. In this case, the above mentioned effects become more remarkable.

It is preferred that at least one type of the first fibers and the second fibers are subjected to a surface treatment in advance.

By subjecting them to the surface treatment in advance, for example, it is possible to improve dispersibility of the first fibers and/or the second fibers in the back-plate composition, and to enhance an adhesive force thereof with respect to the resin.

Examples of a method for such a surface treatment include a coupling agent treatment, an oxidation treatment, an ozone treatment, a plasma treatment, a corona treatment, and a blast treatment. One type of them can be used alone or two or more types of them can be used in combination. Among them, particularly, the method for the surface treatment is preferably the coupling agent treatment.

A coupling agent used for the coupling agent treatment is not particularly limited, and can be appropriately selected depending on the type of the resin.

Examples of the coupling agent include a silane based coupling agent, a titanium based coupling agent, and an aluminum based coupling agent. One type of them can be used alone or two or more types of them can be used in combination. Among them, particularly, the coupling agent is preferably the silane based coupling agent. This makes it possible to especially improve adhesiveness of the first fibers and/or the second fibers with respect to the resin.

Examples of the silane based coupling agent include an epoxy silane coupling agent, a cationic silane coupling agent, an amino silane coupling agent, a vinyl silane coupling agent, a mercapto silane coupling agent, a methacrylic silane coupling agent, a chlorosilane coupling agent, an acrylic silane coupling agent, and the like.

In the back plate 11, for example, the first fibers and the second fibers may be oriented along a thickness direction of the back plate 11, may be oriented along a surface direction of the back plate 11, may be oriented along a direction inclined at a predetermined angle with respect to the thickness direction or the surface direction of the back plate 11, or may not be oriented (may be in a non-oriented state), respectively. However, of the first fibers and the second fibers, at least the first fibers are preferably oriented along the surface direction of the back plate 11. This makes it possible to further reduce dimensional variation along the surface direction of the back plate 11. As a result, it is possible to more reliably suppress or prevent deformation such as warpage of the back plate 11. In this regard, the phrase "the first fibers and the second fibers are oriented along the surface direction of the back plate 11" means a state that the first fibers and the second fibers are oriented substantially parallel to the surface of the back plate 11.

Especially, in the case where the first fibers and/or the second fibers are oriented along the surface direction of the back plate 11, in a state that the back plate 11 is arranged so as to correspond to the disc 200 as shown in FIG. 5, the first fibers and/or the second fibers may be randomly present without being oriented along a specific direction within the surface thereof, may be oriented along the radial direction of the disc 200, may be oriented along the rotational direction (an advancing direction) A of the disc 200, or may be oriented along an intermediate direction between these directions (a predetermined direction). In this regard, in the case where, of the first fibers and the second fibers, at least the first fibers are randomly present without being oriented along the specific direction within the surface thereof, the back plate 11 can have high bending strength and compression strength uniformly in all directions within the surface thereof. Further, in the case where at least the first fibers are oriented along the rotational direction A of the disc 200 braked by the brake pad 10, it is possible to selectively enhance the bending strength and the compression strength of the back plate 11 along the rotational direction A of the rotating disc 200. As a result, braking performance of the caliper device 100 provided with the back plate 11 to the disc 200 becomes particularly good. In this regard, the phrase "the first fibers or the second fibers are oriented along the rotational direction A of the disc 200" means that the first fibers or the second fibers are oriented along the surface direction of the back plate 11, and oriented along the rotational direction A of the disc 200 in a substantially parallel manner.

A total amount of the first fibers and the second fibers contained in the back-plate composition is preferably in the range of 20 to 80 mass%, and more preferably in the range of 30 to 70 mass%. If the total amount of the first fibers and the second fibers is less than the above lower limit value, there is a case that the mechanical strength of the back plate 11 decreases depending on the materials of the first fibers and the second fibers. On the other hand, if the total amount of the first fibers and the second fibers exceeds the above upper limit value, there is a case that the flowability of the back-plate composition decreases when molding the back plate 11.

In the case where the amount of the first fibers contained in the back-plate composition is defined as "X1" [mass%] and the amount of the second fibers contained therein is defined as "X2" [mass%], "X2"/"X1" preferably satisfies a relationship of 0.05 to 1, and more preferably satisfies a relationship of 0.1 to 0.25. If the ratio "X2"/"X1" of the amount of the second fibers to the amount of the first fibers is less than the above lower limit value, in the case where the first fibers have relatively long lengths, breakage and the like thereof become easy to occur when manufacturing the back plate 11. On the other hand, if the ratio "X2"/"X1" of the amount of the second fibers to the amount of the first fibers exceeds the above upper limit value, in the case where the first fibers have relatively short lengths, the mechanical strength of the back plate 11 may often decrease. Further, if the first fibers and the second fibers are formed of the same material or the same type of material, these tendencies become significant.

The amount of the first fibers is preferably in the range of 35 to 80 mass%, more preferably in the range of 40 to 75 mass%, and even more preferably in the range of 50 to 65 mass%. If the amount of the first fibers is less than the above lower limit value, there is a case that shrinkage percentage of the back plate 11 when molding it slightly increases depending on the lengths of the first fibers and the amount of the second fibers. On the other hand, if the amount of the first fibers exceeds the above upper limit value, there is a case that the breakage and the like of the first fibers become easy to occur when manufacturing the back plate 11 depending on the lengths of the first fibers and the amount of the second fibers.

The amount of the second fibers is preferably in the range of 2 to 40 mass%, more preferably in the range of 3 to 35 mass%, and even more preferably in the range of 5 to 30 mass%. If the amount of the second fibers is less than the above lower limit value, there is a case that mechanical properties of the back plate 11 are not sufficiently obtained depending on the lengths of the second fibers and the amount of the first fibers. On the other hand, if the amount of the second fibers exceeds the above upper limit value, there is a case that the flowability of the back-plate composition when molding the back plate 11 is not sufficiently obtained.

In this regard, the back-plate composition may also contain one or a plurality of third fibers and the like, in addition to the plurality of first fibers (the first fiber group) and the plurality of second fibers (the second fiber group) as described above.

As necessary, the back-plate composition may further contain a curing agent, a curing aid agent, a filler, a mold release agent, a pigment, a sensitizer, an acid proliferating agent, a plasticizer, a flame retardant, a stabilizing agent, an antioxidant, an antistatic agent, and the like.

The curing agent can be appropriately selected and used depending on the type and the like of the resin, and is not limited to a specific compound.

For example, in the case where the phenol resin is used as the resin, the curing agent can be used by selecting from epoxy type compounds each having two or more functional groups, isocyanates, hexamethylene tetramine, and the like.

Further, in the case where the epoxy resin is used as the resin, the curing agent can be used by selecting from amine compounds such as an aliphatic polyamine, an aromatic polyamine and dicyamine diamide; acid anhydrides such as an alicyclic acid anhydride and an aromatic acid anhydride; polyphenol compounds such as a novolac type phenol resin; imidazole compounds; and the like. Among them, the novolac type phenol resin is preferably selected as the curing agent from the viewpoints of handling property and also from an environmental perspective.

In particular, in the case where the phenol novolac type epoxy resin, the cresol novolac type epoxy resin or the tris(hydroxyphenyl) methane type epoxy resin is used as the epoxy resin, the novolac type phenol resin is preferably selected and used as the curing agent. This makes it possible to improve the heat resistance of a cured product of the back-plate composition (the back plate 11).

In the case where the curing agent is used, an amount of the curing agent contained in the back-plate composition is appropriately set depending on the types and the like of the curing agent and the resin to be used, but is, for example, preferably in the range of 0.1 to 30 mass%. This makes it possible to easily form the back plate 11 into any shapes.

Further, as the curing aid agent, an imidazole compound, a tertiary amine compound, an organic phosphorous compound, and the like can be used, but it is not particularly limited thereto.

In the case where the curing aid agent is used, an amount of the curing aid agent contained in the back-plate composition is appropriately set depending on the types and the like of the curing aid agent and the curing agent to be used, but is, for example, preferably in the range of 0.001 to 10 mass%. This makes it possible to more easily cure the back-plate composition to thereby easily obtain the back plate 11.

Furthermore, examples of the filler include, but are not particularly limited to, an inorganic filler, an organic filler, and the like. Examples of the inorganic filler include calcium carbonate, clay, silica, mica, talc, wollastonite, glass beads, milled carbon, graphite, and the like. One type of them can be used alone or two or more types of them can be used in combination. Further, examples of the organic filler include polyvinyl butyral, acrylonitrile butadiene rubber, pulp, wood powder, and the like. One type of them can be used alone or two or more types of them can be used in combination. Among them, particularly, the acrylonitrile butadiene rubber is preferably used as the filler (the organic filler) from the viewpoints of further enhancing an effect of improving toughness of the back plate 11 (the molded product).

In the case where the filler is used, an amount of the filler contained in the back-plate composition is not particularly limited, but is preferably in the range of 1 to 30 mass%. This makes it possible to further improve the mechanical strength of the back plate 11.

Moreover, as the mold release agent, zinc stearate, calcium stearate, and the like can be used, but it is not particularly limited thereto.

In the case where the mold release agent is used, an amount of the mold release agent contained in the back-plate composition is not particularly limited, but is preferably in the range of 0.01 to 5.0 mass%. This makes it possible to easily mold the back plate 11 into any shapes.

As a method of preparing the back-plate composition, a powder impregnation method utilizing rovings according to the description of, for example, JP-T 2002-509199 can be used.

The powder impregnation method utilizing the rovings is a method of coating a first strand and a second strand by a dry method using fluidized-bed technology. Specifically, first, the other material(s) constituting the back-plate composition besides the first fibers and the second fibers is(are) directly adhered to the first strand and the second strand from a fluidized-bed without being kneaded in advance. Next, the other material(s) is(are) firmly adhered to the first strand and the second strand by being heated for a short period of time. Then, the first strand and the second strand, which are coated with the above material(s) in this way, are passed through a condition regulating section including a cooling apparatus, and optionally including a heating apparatus. Thereafter, the cooled and coated first strand and second strand are collected, and then, respectively, cut to desired lengths to thereby obtain coated first fibers and coated second fibers. Next, the coated first fibers and the coated second fibers are mixed with each other. In this way, the back-plate composition can be prepared.

Further, examples of a method of molding the back plate 11 include compression molding, transfer molding, and injection molding.

By performing the compression molding, it is possible to weaken a degree of orientation of the first fibers and/or the second fibers at a time of molding. For this reason, anisotropy in the back plate 11 can be reduced in physical properties such as the strength distribution, molding shrinkage and linear expansion. Further, the compression molding can be appropriately used when molding a back plate 11 having a thick thickness. Furthermore, according to the compression molding, the lengths of the first fibers and the second fibers contained in the back-plate composition can be more stably maintained in the back plate 11 as well. Moreover, loss of the back-plate composition when molding it can also be reduced.

On the other hand, by performing the transfer molding, it is possible to control dimensions of the back plate 11 to be molded with higher precision. Thus, the transfer molding can be appropriately used for manufacturing a back plate 11 having a complex shape and a back plate 11 requiring high dimensional precision. Further, the transfer molding can also be appropriately used for insert molding.

Further, by performing the injection molding, it is possible to further shorten molding cycles of the back plate 11. This makes it possible to improve mass producibility of the back plate 11. The injection molding can also be appropriately used for molding a back plate 11 having a complex shape. Furthermore, in the case where the back-plate composition is injected at a high speed, it is possible to control the orientation states of the first fibers and the second fibers in the back plate 11 with higher precision, for example, it is possible to improve the degree of orientation of the first fibers and the second fibers in the back plate 11.

Further, examples of a method of manufacturing the brake pad 10 include, but are not particularly limited to, a method of molding the back plate 11, and then attaching (bonding) the back plate 11 to the friction material 12, a method of integrally molding the back plate 11 and the friction material 12, and the like.

### [Second embodiment of brake pad]

Next, description will be made on a second embodiment of the brake pad of the present invention.

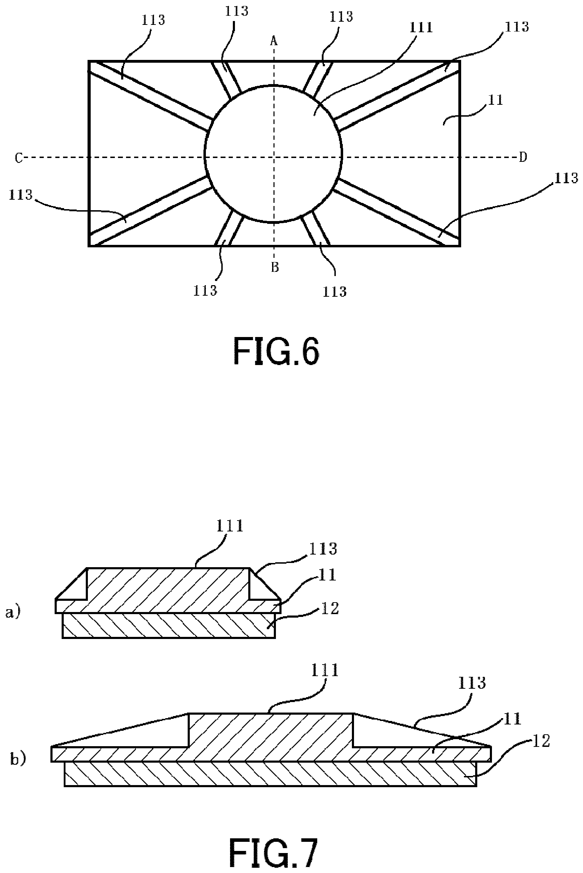

FIG. 6 is a cross-sectional view showing the second embodiment of the brake pad of the present invention.

FIG. 7(a) is an A-B cross-sectional view of the brake pad shown in FIG. 6, and FIG. 7(b) is a C-D cross-sectional view thereof.

Hereinafter, the second embodiment will be described with emphasis placed on points differing from the above mentioned first embodiment. No description will be made on the corresponding points. In this regard, the same reference numbers are applied to elements corresponding to those of the first embodiment.

As shown in FIG. 6, in the brake pad 10 according to this embodiment, the back plate 11 has 8 ribs 113 each arranged from the contact portion 111 toward the edge portion of the back plate 11. In other words, the back plate 11 has the 8 ribs 113 extending in a radial fashion. Such a back plate 11 can be regarded as a configuration in which portions other than the contact portion 111, the ribs 113 and a bottom portion are removed from the back plate 11 of the first embodiment.

As shown in FIG. 6, the ribs 113 are symmetric with respect to a point (that is, they are symmetric with respect to the A-B line in the left-right direction of FIG. 6 and symmetric with respect to the C-D line in the up-down direction thereof) in a planar view thereof. This allows the pressing force of the piston 30 supplied to the contact portion 111 to be uniformly transmitted to the edge portion. Therefore, it is possible to sufficiently and uniformly supply the pressing force of the piston 30 to the disc 200 through the whole surface of the friction material 12.

Further, as shown in FIG. 7, each rib 113 is formed so that a height thereof decreases from the contact portion 111 toward the edge portion. Therefore, the thickness of the back plate 11 provided with the ribs 113 also decreases from the contact portion 111 toward the edge portion.

By the above mentioned configuration, the pressing force of the piston 30 supplied to the contact portion 111 is more uniformly transmitted to the edge portion. Therefore, it is possible to more uniformly supply the pressing force of the piston 30 to the disc 200 through the whole surface of the friction material 12, and to save the weight of the brake pad 10.

In this regard, the back plate 11 has the 8 ribs 113 in this embodiment, but the number of the ribs 113 is not limited thereto. As described above, in the case where the ribs 113 are symmetric with respect to the lines in the planar view thereof, the pressing force of the piston 30 supplied to the contact portion 111 can be uniformly transmitted to the edge portion. Therefore, in order that the ribs 113 are arranged so as to become symmetric with respect to the lines in the planar view thereof, the number of the ribs 113 is preferably an even number, and more preferably an even number of 4 to 12. This makes it possible to maintain (balance) the weight saving of the brake pad 10 and the stiffness of the back plate 11 at a high level. As a result, the brake pad 10 (the caliper device 100) provided with such a back plate 11 can continually exhibit further excellent braking performance.

### [Third embodiment of brake pad]

Next, description will be made on a third embodiment of the brake pad of the present invention.

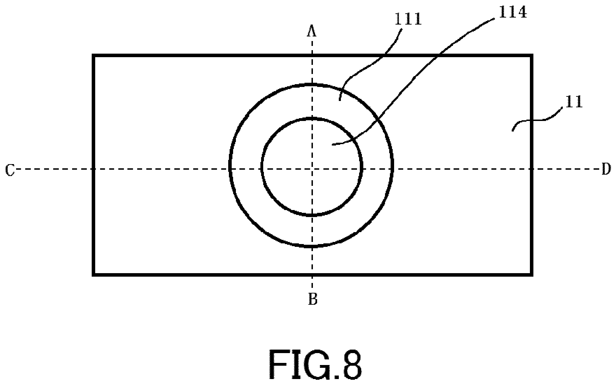

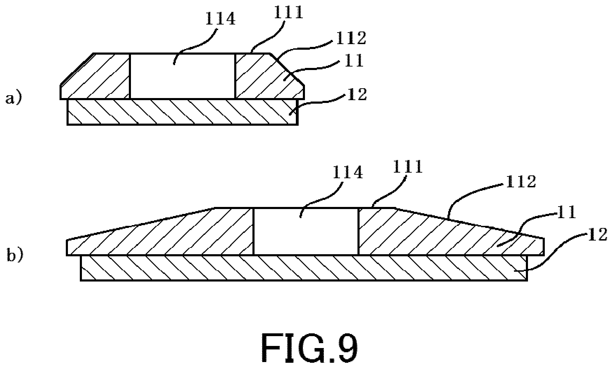

FIG. 8 is a cross-sectional view showing the third embodiment of the brake pad of the present invention. FIG. 9(a) is an A-B cross-sectional view of the brake pad shown in FIG. 8, and FIG. 9(b) is a C-D cross-sectional view thereof.

Hereinafter, the third embodiment will be described with emphasis placed on points differing from the above mentioned first embodiment. No description will be made on the corresponding points. In this regard, the same reference numbers are applied to elements corresponding to those of the first embodiment.

As shown in FIGs. 8 and 9, in the brake pad 10 according to this embodiment, the contact portion 111 has a circular ring shape in a planar view thereof, and a through hole 114 is provided on the inside (the center side) of the contact portion 111 of the back plate 11 so as to pass through the back plate 11 along a thickness direction thereof.

By the above mentioned configuration, it is possible to more uniformly supply the pressing force of the piston 30 to the disc 200 through the whole surface of the friction material 12, and to save the weight of the brake pad 10.

Further, this through hole 114 can mitigate (absorb) expansion or contraction of the back plate 11 to thereby reduce a deformation amount of the back plate 11. This makes it possible to prevent cracks or the like from occurring in the back plate 11 even at an area where a distance between the contact portion 111 and the edge portion is relatively short.

In this regard, the contact portion 111 has the circular ring shape in this embodiment, but may have an angular ring shape (e.g., a trigonal ring shape, a tetragonal ring shape, a hexagonal ring shape) in the planar view thereof. From the viewpoints of enhancing the strength (the stiffness) of the back plate 11, it is preferred that the contact portion 111 has a shape symmetric with respect to a point in the planar view thereof. Therefore, the shape of the contact portion 111 in the planar view thereof is preferably the tetragonal ring shape or the hexagonal ring shape among the angular ring shapes.

Further, a thin-walled portion whose thickness is smaller than that of the contact portion 111 may be provided on an inner surface of the back plate 11 defining such a through hole 114. The thin-walled portion may be provided at any region of the inner surface along a height direction of the contact portion 111. For example, the thin-walled portion may be provided on the side of a bottom surface of the back plate 11 (the contact portion 111), that is, the side of the friction material 12, on the side of a top surface of the contact portion 111, that is, the side of the piston 30, or between the top surface and the bottom surface of the contact portion 111, that is, at a central region of the inner surface. Further, the number of such a thin-walled portion is not particularly limited, and may be one or plural. From the viewpoints of saving the weight of the back plate 11 and enhancing the stiffness thereof, it is preferred that the number of the thin-walled portion is in the range of about 1 to 3.

This makes it possible to improve the mechanical strength of the back plate 11 as compared with the back plate 11 in which only the through hole 114 is provided.

Hereinabove the preferred embodiments of the present invention have been described, but the present invention is not limited thereto.

Further, the brake pad was composed of a mono-layer back plate and a mono-layer friction material in the above mentioned embodiments, but the structure of the brake pad is not limited thereto. For example, the back plate may be composed of a multi-layer laminated body, the friction material may be composed of a multi-layer laminated body, or both the back plate and the friction material may be composed of the multi-layer laminated bodies.

### INDUSTRIAL APPLICABILITY

According to the present invention, a brake pad includes a friction material provided on the side of the disc, and a back plate bonded on the side of the friction material opposite from the disc, the back plate having a contact portion making contact with a piston and an edge portion. A thickness of the contact portion of the back plate is substantially constant and larger than a thickness of the edge portion of the back plate. This makes it possible to provide the brake pad capable of sufficiently and uniformly transmitting a pressing force of the piston to the disc through the whole surface of the friction material, and the caliper device provided with the brake pad. Therefore, the present invention has industrial applicability.

## Claims

1. A brake pad for braking a rotating disc by being pressed toward the disc by a piston, the brake pad comprising:
a friction material provided on the side of the disc; and
a back plate bonded on the side of the friction material opposite from the disc, the back plate having a contact portion making contact with the piston and an edge portion,
wherein a thickness of the contact portion of the back plate is substantially constant and larger than a thickness of the edge portion of the back plate.

2. The brake pad as claimed in claim 1, wherein the back plate has a gradual decrease portion whose thickness gradually decreases from the contact portion toward the edge portion.

3. The brake pad as claimed in claim 1 or 2, wherein the back plate has a rib extending from the contact portion toward the edge portion, and a height of the rib gradually decreases from the contact portion toward the edge portion.

4. The brake pad as claimed in any one of claims 1 to 3, wherein the contact portion has a ring shape in a planar view thereof, and a through hole is provided on the inside of the contact portion so as to pass through the back plate along a thickness direction thereof.

5. The brake pad as claimed in any one of claims 1 to 4, wherein the thickness of the back plate at the contact portion is in the range of 4 to 12 mm.

6. A caliper device comprising:
the brake pad defined by any one of claims 1 to 5;
the piston that presses the brake pad toward the disc; and
a caliper in which the piston is put so as to be movable.
